# EUROPEAN PATENT SPECIFICATION

(11) **EP 2 535 206 B1**
(45) Date of publication and mention of the grant of the patent: **11.10.2017**
(21) Application number: 12169279.2
(22) Date of filing: 24.05.2012
(51) Int. Cl.: B60C 11/03, B60C 9/20

(54) **Motorcycle tire**
Motorradreifen
Pneu de moto

(30) Priority: 13.06.2011 JP 2011131446
(43) Date of publication of application: 19.12.2012
(73) Proprietor: SUMITOMO RUBBER INDUSTRIES LIMITED, Kobe-shi, Hyogo-ken (JP)
(72) Inventor: Harada, Yusuke, Kobe-shi, Hyogo 651-0072 (JP)
(74) Representative: Manitz Finsterwald Patentanwälte PartmbB

(56) References cited:
- EP-A1- 1 473 176
- WO-A1-2011/012977
- WO-A1-2011/012980
- US-S1- D 604 225

## Description

### Background of the invention

The present invention relates to a pneumatic tire, more particularly to a tread structur of a motorcycle tire capable of improving transient characteristic in a transient state from straight running to cornering or vice versa. The features of the preamble of the independent claim are known from WO2011/012980 A1. EP1473176A1 and WO2011/012977A1 disclose motorcycle tires.

In recent years, according to the developments of high-powered motorcycles and expressway network, street motorcycle tires are required to provide improved high speed stability of the motorcycle. In view of this, the tread portion of such tire is reinforced by cross breaker plies. Usually, the cross breaker plies have difference widths so that the edges of the plies do not coincide with each other.
Accordingly, in the tread portion, there are an overlap region where the two breaker plies exist and overlap each other and a single-ply region on each side thereof where only one breaker ply exists, therefore, the rigidity of the tread portion differs between the overlap region and single-ply region.
As a result, there is not good, namely, the change in the steering effort, when the rider leans to tilt the motorcycle body to ride through a corner and the ground contacting center of the tire moves between the overlap region and single-ply region, is relatively large.

### Summary of the Invention

It is therefore, an object of the present invention to provide a motorcycle tire, in which the transient characteristic can be improved.

According to the present invention, a motorcycle tire comprises
a tread portion,
a pair of sidewall portions,
a pair of bead portions each with a bead core therein,
a carcass extending between the bead portions through the tread portion and sidewall portions, and
a breaker disposed radially outside the carcass in the tread portion and composed of two cross plies of breaker cords having different axial widths,
the tread portion is provided on each side of the tire equator with main oblique grooves so that each of the main oblique grooves has an axially inner end at a certain axial distance from the tire equator, and extends axially outwardly beyond the side edge of the narrow width ply of the breaker, and terminates within the tread portion,
each of the main oblique grooves comprises
an axially inner oblique segment extending axially outwardly from said axially inner end, while inclining to one tire circumferential direction at a small angle with respect to the tire circumferential direction, and
an axially outer oblique segment extending from the axially outer end of the axially inner oblique segment, while inclining to said one tire circumferential direction at a large angle with respect to the tire circumferential direction which is larger than the small angle of the axially inner oblique segment so as to form a bent point therebetween, and
the developed axial distance from the bent point to the side edge of the narrow width ply is not more than 10 % of the developed tread width.

Therefore, the axially outer oblique segments mainly extend in the single-ply region where only the wider breaker ply exists and the tread rigidity is relatively low, and the axially outer oblique segments have the angle more than that of the axially inner oblique segments. Therefore, the lateral rigidity of the tread pattern in this single-ply region is relatively increased, and the shearing force in the lateral direction during cornering can be relatively increased. Thus, the rigidity difference due to the breaker plies is decreased by the difference in the tread pattern rigidity, and the transient characteristic can be improved.

The motorcycle tire according to the present invention may be further provided with the following optional features:
the angle between the axially inner oblique segment and the axially outer oblique segment is 160 to 175 degrees;
the width of the axially inner oblique segment is gradually increased from the axially inner end towards the bent point;
the tread portion is further provided with an auxiliary oblique groove between the main oblique grooves so as to incline to the same direction as the main oblique grooves, wherein the auxiliary oblique groove has an axially inner end positioned axially outside the axially inner end of the main oblique grooves and axially inside the bent point, and an axially outer end positioned axially outside the bent point and axially inside the axially outer end of the main oblique grooves;
the developed axial distance from the axially outer end of the auxiliary oblique groove to the bent point of the main oblique groove is 5 to 10 % of the developed tread width; and
the developed axial distance from the axially inner end of the main oblique grooves to the tire equator is 7.5 to 15 % of the developed tread width, and the developed axial distance from the axially outer end of the main oblique grooves to the tread edge is 5 to 10 % of the developed tread width.

In this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The undermentioned normally inflated loaded condition is such that the tire is mounted on the standard wheel rim and inflate to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used. The standard pressure is the maximum air pressure specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various cold Inflation Pressures" table in TRA or the like.

The developed tread width TWe means a distance measured perpendicularly to the tire equator from one of the tread edges 2t to the other along the tread surface.

### Brief Description of the Drawings

Fig.1 is a developed partial plan view of the tread portion of a motorcycle tire according to the present invention.
Fig.2 is a cross sectional view of motorcycle tire taken along line A-A of Fig.1.

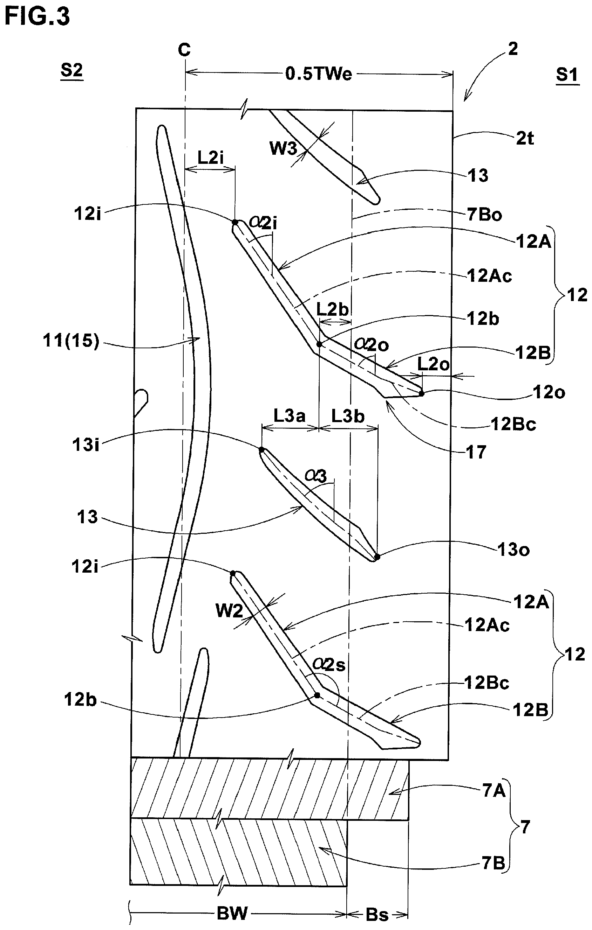

Fig.3 is a closeup of Fig.1.

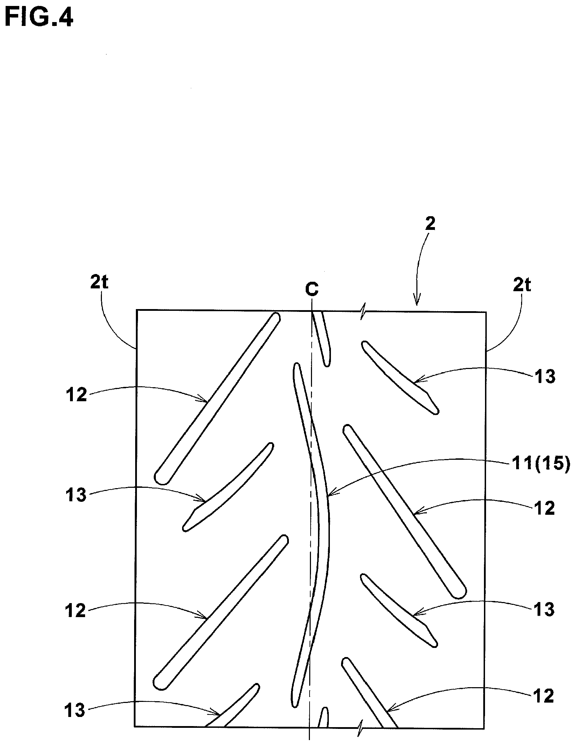

Fig.4 is a developed partial view of the tread portion of a motorcycle tire used in the undermentioned comparative test as a comparative tire.

### Description of the Preferred Embodiments

Embodiments of the present invention will now be described in detail in conjunction with accompanying drawings.

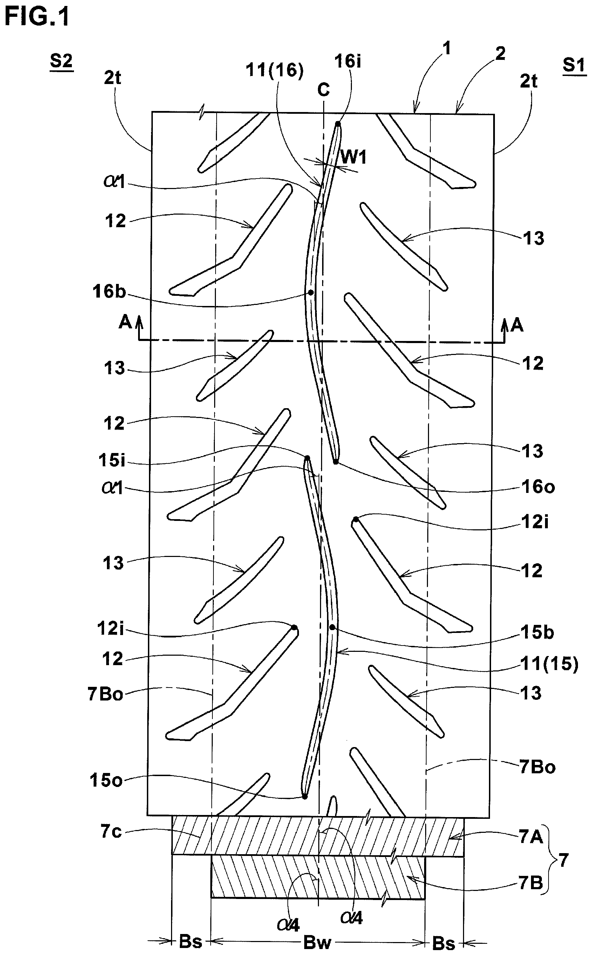

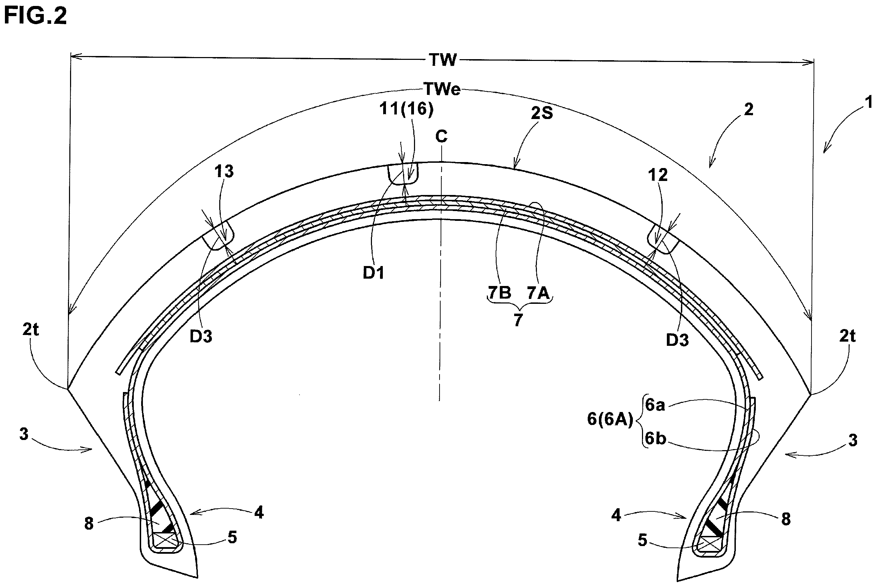

According to the present invention, as shown in Fig. 1 and Fig.2, a motorcycle tire 1 comprises a tread portion 2, a pair of sidewall portions 3, a pair of bead portions 4 each with a bead core 5 therein, a carcass 6 extending between the bead portions 4 through the tread portion 2 and sidewall portions 3, and a breaker 7 disposed radially outside the carcass 6 in the tread portion 2. The tire 1 is designed as a street bike tire used on well-paved roads.

As a characteristic of a motorcycle tire, the tread portion 2 is convexly curved so that the tread face 2s between the tread edges 2t is curved like an arc swelling radially outwardly, and the maximum cross sectional width of the tire 1 occurs between the tread edges 2t, namely, equals to the axial tread width TW.

The carcass 6 is composed of at least one carcass ply 6A, in this embodiment only one carcass ply 6A, extending between the bead portions 4 through the tread portion 2 and sidewall portions 3, and turned up around the bead core 5 in each of the bead portions 4 so as to form a pair of turned up portions 6b and a main portion 6a therebetween. The carcass ply 6A is made of carcass cords arranged at an angle of from 65 to 90 degrees with respect to the tire equator C. For the carcass cords, organic fiber cords such as nylon, polyester, rayon and the like can be used.

In each of the bead portions 4, between the carcass ply main portion 6a and turned up portion 6b, there is disposed a bead apex 8 made of hard rubber extending radially outwardly in a tapered manner from the bead core.

The breaker 7 is composed two cross plies 7A and 7B each made of rubberized parallel breaker cords 7c laid at an angle α4 of from 15 to 25 degrees with respect to the tire equator C. For the breaker cords, for example, steel cords, aramid cords, rayon cords and the like can be used.
The two cross plies 7a and 7B have difference axial widths. In this embodiment, the narrow breaker ply 7B is disposed on the carcass 6 and the wide breaker ply 7a is disposed on the narrow breaker ply 7B. The axial width of the wide breaker ply 7A is substantially same as or slightly larger than the maximum cross sectional width of the carcass 6 as shown in Fig.2.

The tread portion 2 is as shown in Fig.1, provided with main longitudinal grooves 11 disposed along the tire equator C, main oblique grooves 12 disposed on each side of the main longitudinal grooves 11, and auxiliary oblique groove 13 disposed on each side of the main longitudinal grooves 11 so as to alternate with the main oblique grooves 12. Each of the grooves 11, 12 and 13 is independent or not connected to another.

The main oblique grooves 12 and auxiliary oblique grooves 13 disposed on one side S1 of the tire equator C are circumferentially shifted from those on the other side S2 of the tire equator. If not shifted, the arrangement of the main oblique grooves 12 and auxiliary oblique grooves 13 is symmetrical about the tire equator.

The main longitudinal grooves 11 are first main longitudinal grooves 15 and second main longitudinal grooves 16 which are alternately arranged in the circumferential direction.

The first main longitudinal groove 15 extends in the tire circumferential direction and gently curves to bulge toward one side S1 of the tire equator C. The most bulging point 15b is disposed on one side S1 and the ends 15i and 15o of the first main longitudinal groove 15 are disposed on the other side S2 of the tire equator C, therefore, the first main longitudinal groove 15 crosses the tire equator C twice.
The angle α1 of the first main longitudinal groove 15 with respect to the tire circumferential direction is gradually increased from the most bulging point 15b toward the ends 15i and 15o within a range of from 0 to 20 degrees.

The second main longitudinal groove 16 extends in the tire circumferential direction and gently curves to bulge toward the other side s2. The most bulging point 16b is disposed on the other side S2 and the ends 16i and 16o of the second main longitudinal groove 16 are disposed on one side S1, therefore, the second main longitudinal groove 16 crosses the tire equator C twice.
The angle α1 of the second main longitudinal groove 16 with respect to the tire circumferential direction is gradually increased from the most bulging point 16b toward the ends 16i and 16o within a range of from 0 to 20 degrees.

Preferably, the maximum width w1 of the main longitudinal groove 11 (15, 16) is set in a range of from 2 to 6 mm, and the depth D1 of the main longitudinal groove 11 (15, 16) is set in a range of from 3 to 6 mm.

In this embodiment, in both end portions of the main longitudinal groove 11 (15, 16), the groove width is gradually decreased toward the ends (15i, 15o, 16i, 16o), but in the rest, the groove width is substantial constant, namely, the width is substantial equal to the maximum width W1.
Such end portion slightly overlaps the circumferentially adjacent end portion. Therefore, the variation in the rigidity of the tread portion 2 near the tire equator becomes smooth, and as a result, it is possible to improve the ride comfort and rolling resistance.
Further, the main longitudinal grooves 11 can decrease the rigidity of the tread crown region where the rigidity is relatively high due to the overlap Bw between the wide ply 7A and narrow width ply 7B.

The main oblique grooves 12 extend axially outwardly from their axially inner ends 12i beyond the side edge 7Bo of the narrow width ply 7B, while inclining to one circumferential direction, and terminate without reaching to the tread edge 2t as shown in Fig.1.

Preferably, the width W2 of the main oblique groove 12 is set in a range of from 3 to 9 mm, and the depth D2 of the main oblique groove 12 is set in a range of from 3 to 6 mm.

It is preferable that the total area of the main oblique grooves 12 at the tread surface (namely, the grooved area formed by the main oblique grooves 12) is set in a range of not less than 4.5 %, more preferably not less than 6.0 %, but not more than 9.0 %, more preferably not more than 8.0 % of the gross area of the tread portion 2.
If the grooved area is less than 4.5 %, the tread pattern rigidity becomes high and the shearing force in the lateral direction increases, therefore the steering effort in straight running and cornering tends to become heavy. If more than 9.0 %, the shearing force in the lateral direction becomes low, then the steering effort tends to be excessively reduced and stability is deteriorated.

The main oblique groove 12 in this embodiment comprises an axially inner oblique segment 12A extending axially outwardly from the axially inner end 12i, while inclining at an angle α2i with respect to the tire circumferential direction, and an axially outer oblique segment 12B extending axially outwardly from the axially inner oblique segment 12A, while inclining at an angle α2o with respect to the tire circumferential direction.

The angle α2o is larger than the angle α2i, therefore, a bent point 12b is formed between the axially inner oblique segment 12A and the axially outer oblique segment 12B. More properly, the bent point 12b of the main oblique grooves 12 is defined as the intersecting point between the widthwise center line 12Ac of the axially inner oblique segment 12A and the widthwise center line 12Bc of the axially outer oblique segment 12B.
such bent point 12b is disposed axially inside the side edge 7Bo of the narrow width ply 7B, and the developed axial distance L2b between the bent point 12b and side edge 7Bo is set to be not more than 10 %, preferably not more than 7.5 %, and preferably not less than 2.5 % of the developed tread width TWe.

In this way, the axially outer oblique segment 12B mainly extends in the single-ply region Bs where only the wide ply 7A exists and the tread rigidity is relatively low, and it has the angle more than that of the axially inner oblique segment 12A. Therefore, the lateral rigidity of the tread pattern in this region Bs is relatively increased, and the shearing force in the lateral direction during cornering can be relatively increased. Thus, the rigidity difference due to the breaker plies 7A and 7B is decreased by the difference in the tread pattern rigidity, and the transient characteristic can be improved.
If the developed axial distance L2b is more than 10 % of the developed tread width TWe, then in the overlap region Bw where the two breaker plies exist, the shearing force in the lateral direction is relatively increased, and it becomes difficult to fully improve the transient characteristic. If the developed axial distance L2b is less than 2.5 %, the bent point 12b substantially coincides with the edge of the overlap region Bw and a large rigidity variation tends to occur at such position.

Preferably, the angle α2s between the widthwise center lines 12Ac and 12Bc of the axially inner and outer oblique segments 12A and 12B is set in a range of not less than 160 degrees, more preferably not less than 165 degrees, but not more than 175 degrees, more preferably not more than 170 degrees. If the angle α2s is less than 160 degrees, then the difference in the tread pattern lateral rigidity caused by the angle difference between the axially inner and outer oblique segments 12A and 12B increases, and there is a possibility that the transient characteristic is deteriorated despite the intention. If the angle α2s is more than 175 degrees, then in the single-ply region Bs, it becomes difficult to relatively increase the tread pattern lateral rigidity effectively to fully improve the cornering performance.

Between the axially inner end 12i and the bent point 12b, the widthwise center line 12Ac of the axially inner oblique segment 12A is straight, and the angle α2i thereof is set in a range of from 40 to 50 degrees in order to improve the cornering performance.
If the angle α2i is less than 40 degrees, it becomes difficult to fully increase the tread pattern lateral rigidity, and the steering effort tends to be excessively reduced and stability is deteriorated. If the angle α2i is more than 50 degrees, the tread pattern lateral rigidity is increased, and the steering effort tends to become heavy.

preferably, the width W2 of the axially inner oblique segment 12A is gradually increased from the axially inner end 12i towards the bent point 12b to improve the transient characteristic.

Further, the developed axial distance L2i from the tire equator C to the axially inner end 12i is preferably set in a range of not less than 7.5 %, more preferably not less than 10 %, but not more than 15 %, more preferably not more than 12.5 % of the developed tread width TWe.
Therefore, the main oblique grooves 12 can contact with the ground continuously from a non-tilt state during straight running to a tilt state during cornering to improve the transient characteristic.
If the developed axial distance L2i is more than 15 % of the developed tread width TWe, then during straight running, the axially inner end portion of the axially inner oblique segment 12A does not contact with the ground, therefore, the transient characteristic can not be fully improved. If the developed axial distance L2i is less than 7.5 % of the developed tread width TWe, then the steering effort during straight running tends to be excessively reduced.

In the axially outer oblique segment 12B, the angle α2o is set in a range of from 50 to 65 degrees from the bent point 12b to the axially outer end 12o of the main oblique groove 12. Therefore, during cornering, the tread pattern lateral rigidity is increased to exert a large shearing force in the lateral direction, and the transient characteristic and the stability in full bank cornering can be improved.
If the angle α2o is less than 50 degrees, there is a possibility that such advantages effects can not be obtained. If the angle α2o is more than 65 degrees, the tread pattern lateral rigidity becomes high, and the steering effort in full bank cornering becomes heavy, therefore, it becomes difficult to improve the transient characteristic.

Preferably, the developed axial distance L2o from the axially outer end 12o to the tread edge 2t is set in a range of not less than 5 %, but not more than 10 %, more preferably not more than 7.5 % of the developed tread width TWe in order not to decrease the ground contacting area near the tread edge 2t and thereby to improve the stability in full bank cornering. If the developed axial distance L2o is less than 5.0 % of the developed tread width TWe, it becomes difficult to maintain the rigidity near the tread edge capable of improving the stability in full bank cornering. If the developed axial distance L2o is more than 10% of the developed tread width TWe, then a large rigidity variation occurs near the axially outer end 12o of the main oblique groove 12, and the transient characteristic can not be fully improved.

Preferably, the axially outer oblique segment 12B is provided with a protruding part 17 at which the groove width W2 becomes maximum. The protruding part 17 is positioned between the bent point 12b and the outer end 12o, and axially outside the axially outer end 13o of the auxiliary oblique groove 13. Therefore, on the axially outside of the axially outer end 13o of the auxiliary oblique groove 13, the protruding part 17 increase the grooved area instead of the auxiliary oblique groove 13 to improve the transient characteristic.

The auxiliary oblique groove 13 is shorter than the main oblique groove 12, and disposed between every two circumferentially adjacent main oblique grooves 12, and inclined to the same circumferential direction as the main oblique grooves 12.
The angle α3 of the widthwise center line of the auxiliary oblique groove 13 is gradually increased from its axial inner end 13i to its axially outer end 13o within a range of from 35 to 55 degrees with respect to the tire circumferential direction. Preferably, the width W3 of the auxiliary oblique groove 13 is set in a range of from 3 to 7 mm, and the depth D3 of the auxiliary oblique groove 13 is set in a range of from 3 to 6 mm.

The axially inner end 13i of the auxiliary oblique groove 13 is disposed axially outside the axially inner end 12i of the main oblique groove 12 and axially inside the bent point 12b of the main oblique groove 12.
The axially outer end 13o of the auxiliary oblique groove 13 is disposed axially outside the bent point 12b and axially inside the axially outer end 12o of the main oblique groove 12. Therefore, the auxiliary oblique groove 13 can decrease the difference in the tread pattern lateral rigidity between the axially outside and inside of the bent point 12b to improve the transient characteristic.
Further, on the axially inside of the axially inner end 12i of the main oblique groove 12 and on the axially outside of the axially outer end 12o of the main oblique groove 12, the ground contacting area is secured to provide straight running stability and to maintain the cornering performance.

Preferably, the developed axial distance L3a from the axially inner end 13i of the auxiliary oblique groove 13 to the bent point 12b of the main oblique grooves 12 is set in a range of not less than 5.0 %, preferably not less than 6.25 %, but not more than 10.0 %, preferably not more than 8.75 % of the developed tread width TWe.
If less than 5 %, it becomes difficult to effectively decrease the difference in the tread pattern lateral rigidity. If more than 10%, the ground contacting area becomes insufficient on the axially inside of the axially inner end 12i, and the steering effort during straight running tends to be excessively reduced.

Similarly, the developed axial distance L3b from the axially outer end 13o of the auxiliary oblique groove 13 to the bent point 12b of the main oblique groove 12 is preferably set in a range of not less than 5.0 %, more preferably not less than 6.25 %, but not more than 10 %, more preferably not more than 8.75 % of the developed tread width TWe.

In this embodiment, the tread portion 2 is provided with no groove other than the main longitudinal grooves 11, main oblique grooves 12 and auxiliary oblique groove 13. The grooves 11-13 are arranged such that three of the axially inner ends 12i of the main oblique grooves 12 and three of the axially inner ends 13i of the auxiliary oblique groove 13 are disposed adjacently to one of the main longitudinal grooves 11.

### comparison Tests

Motorcycle tires having the internal structure shown in Fig.2 and main and auxiliary oblique grooves whose specifications are shown in Table 1 were experimentally manufactured and tested.
Common specifications are as follows:
tire size:
   front wheel: 120/70ZR17 (rim size: MT3.50X17)
   rear wheel: 160/60ZR17 (rim size: MT4.50X17) developed tread width TWe: 166 mm
main longitudinal grooves:
   width W1: 4.7 mm
   depth D1: 4.1 mm
main oblique grooves:
   width W2: 5.4 mm,
   depth D2: 4.1 mm
auxiliary oblique grooves:
   width W3: 5.3 mm
   depth D3: 3.5 mm
In the test, 650cc motorcycle provided with test tires was run on a dry asphalt road surface of a tire test course, and the test rider evaluated the steering effort during straight running (steering stability), steering effort during cornering, transient characteristic and stability in full bank cornering. The results are indicated in Table 1 by an index based on comparative example tire Ref.1 being 100, wherein the larger the value, the better the performance.

From the test results, it was confirmed that motorcycle tires according to the present invention can be improved in the transient characteristic.

**Table 1 (1/2)**

| Tire | Ref.1 | Ex.1 | Ex.2 | Ex.3 | Ex.4 | Ex.5 | Ex.6 | Ex.7 | Ex.8 | Ex.9 |
|---|---|---|---|---|---|---|---|---|---|---|
| tread pattern (Fig. No.) | 4 | 1 | 1 | 1 | 1 | 1 | 1 | 1 | 1 | 1 |
| main oblique grooves' area/gross tread area (%) | 5.00 | 4.75 | 9.50 | 4.00 | 5.00 | 5.00 | 5.00 | 4.50 | 4.75 | 5.25 |
| angle α2i (deg) | 45 | 45 | 45 | 45 | 35 | 55 | 45 | 45 | 45 | 45 |
| distance L2i (mm) | 8.3 | 16.6 | 16.6 | 16.6 | 16.6 | 16.6 | 8.3 | 33.2 | 16.6 | 16.6 |
| L2i/0.5TWe (%) | 10 | 20 | 20 | 20 | 20 | 20 | 10 | 40 | 20 | 20 |
| distance L2o (mm) | 8.3 | 8.3 | 8.3 | 8.3 | 8.3 | 8.3 | 8.3 | 8.3 | 16.6 | 0 |
| L2o/0.5TWe (%) | 10 | 10 | 10 | 10 | 10 | 10 | 10 | 10 | 20 | 0 |
| angle α2o (deg.) | 45 | 55 | 55 | 55 | 45 | 65 | 55 | 55 | 55 | 55 |
| angle α2s (deg.) | 180 | 170 | 170 | 170 | 170 | 170 | 170 | 170 | 170 | 170 |
| distance L2b (mm) | - | 16.6 | 16.6 | 16.6 | 16.6 | 16.6 | 16.6 | 16.6 | 16.6 | 16.6 |
| L2b/0.5TWe (%) | - | 20 | 20 | 20 | 20 | 20 | 20 | 20 | 20 | 20 |
| axially inner oblique segment's width W2 increased ? | - | yes | yes | yes | yes | yes | yes | yes | yes | yes |
| distance L3a (mm) | - | 16.6 | 16.6 | 16.6 | 16.6 | 16.6 | 16.6 | 16.6 | 16.6 | 16.6 |
| L3a/0.5TWe (%) | - | 20 | 20 | 20 | 20 | 20 | 20 | 20 | 20 | 20 |
| distance L3b (mm) | - | 16.6 | 16.6 | 16.6 | 16.6 | 16.6 | 16.6 | 16.6 | 16.6 | 16.6 |
| L3b/0.5TWe(%) | - | 20 | 20 | 20 | 20 | 20 | 20 | 20 | 20 | 20 |
| axially outer oblique segment has protruding part ? | - | yes | yes | yes | yes | yes | yes | yes | yes | yes |
| steering effort during straight running | 100 | 105 | 95 | 95 | 95 | 95 | 100 | 95 | 100 | 105 |
| steering effort during cornering | 100 | 110 | 95 | 95 | 95 | 95 | 110 | 110 | 95 | 90 |
| transient characteristic | 100 | 105 | 105 | 105 | 105 | 105 | 105 | 90 | 100 | 105 |
| cornering stability | 100 | 105 | 105 | 105 | 105 | 105 | 105 | 105 | 105 | 95 |

**Table 1 (2/2)**

| Tire | Ex.10 | Ex.11 | Ex.12 | Ref. 2 | Ex.13 | Ex.14 | Ex.15 | Ex.16 | Ex.17 | Ex.18 |
|---|---|---|---|---|---|---|---|---|---|---|
| tread pattern (Fig. No.) | 1 | 1 | 1 | 1 | 1 | 1 | 1 | 1 | 1 | 1 |
| main oblique grooves' area/gross tread area (%) | 5.00 | 5.00 | 5.00 | 5.00 | 5.00 | 5.00 | 5.00 | 5.00 | 5.00 | 5.00 |
| angle α2i (deg.) | 45 | 45 | 45 | 45 | 45 | 45 | 45 | 45 | 45 | 45 |
| distance L2i (mm) | 16.6 | 16.6 | 16.6 | 16.6 | 16.6 | 16.6 | 16.6 | 16.6 | 16.6 | 16.6 |
| L2i/0.5TWe (%) | 20 | 20 | 20 | 20 | 20 | 20 | 20 | 20 | 20 | 20 |
| distance L2o (mm) | 8.3 | 8.3 | 8.3 | 8.3 | 8.3 | 8.3 | 8.3 | 8.3 | 8.3 | 8.3 |
| L2o/0.5TWe (%) | 10 | 10 | 10 | 10 | 10 | 10 | 10 | 10 | 10 | 10 |
| angle α2o (deg.) | 50 | 65 | 55 | 55 | 55 | 55 | 55 | 55 | 55 | 55 |
| angle α2s (deg.) | 175 | 160 | 170 | 170 | 170 | 170 | 170 | 170 | 170 | 170 |
| distance L2b (mm) | 16.6 | 16.6 | 8.3 | 24.9 | 16.6 | 16.6 | 16.6 | 16.6 | 16.6 | 16.6 |
| L2b/0.5TWe (%) | 20 | 20 | 10 | 30 | 20 | 20 | 20 | 20 | 20 | 20 |
| axially inner oblique segment width W2 increased ? | yes | yes | yes | yes | no | yes | yes | yes | yes | yes |
| distance L3a (mm) | 16.6 | 16.6 | 16.6 | 16.6 | 16.6 | 4.2 | 20.8 | 16.6 | 16.6 | 16.6 |
| L3a/0.5TWe (%) | 20 | 20 | 20 | 20 | 20 | 5 | 25 | 20 | 20 | 20 |
| distance L3b (mm) | 16.6 | 16.6 | 16.6 | 16.6 | 16.6 | 16.6 | 16.6 | 4.2 | 20.8 | 16.6 |
| L3b/0.5TWe(%) | 20 | 20 | 20 | 20 | 20 | 20 | 20 | 5 | 25 | 20 |
| axially outer oblique segment has protruding part ? | yes | yes | yes | yes | yes | yes | yes | yes | yes | no |
| steering effort during straight running | 105 | 105 | 105 | 100 | 105 | 105 | 95 | 105 | 105 | 105 |
| steering effort during cornering | 100 | 100 | 110 | 100 | 110 | 110 | 110 | 110 | 100 | 110 |
| transient characteristic | 90 | 90 | 110 | 90 | 95 | 95 | 105 | 95 | 105 | 95 |
| cornering stability | 90 | 90 | 105 | 90 | 105 | 105 | 105 | 105 | 95 | 105 |

## Claims

1. A motorcycle (1) tire comprising
a tread portion (2),
a pair of sidewall portions (3),
a pair of bead portions (4) each with a bead core (5) therein,
a carcass (6) extending between the bead portions (4) through the tread portion (2) and sidewall portions (3), and
a breaker (7) disposed radially outside the carcass (6) in the tread portion (2) and composed of two cross plies (7A, 7B) of breaker cords (7c),
the tread portion (2) is provided on each side of the tire equator (C) with main oblique grooves (12) so that each of the main oblique grooves (12) has an axially inner end (12i) at a certain axial distance from the tire equator (C), and extends axially outwardly and terminates within the tread portion (2),
each of the main oblique grooves (12) comprises an axially inner oblique segment (12A) extending axially outwardly from said axially inner end (12i), while inclining to one tire circumferential direction at a small angle (α2i) with respect to the tire circumferential direction, and
an axially outer oblique segment (12B) extending from the axially outer end of the axially inner oblique segment (12A), while inclining to said one tire circumferential direction at a large angle (α2o) with respect to the tire circumferential direction which is larger than the small angle (α2i) of the axially inner oblique segment (12A) so as to form a bent point (12b) therebetween, and
the tread portion (2) is further provided with an auxiliary oblique groove (13) so as to alternate with the main oblique grooves (12),
**characterized in that**
the two cross plies (7A, 7B) of breaker cords (7c) have different axial widths,
each of the main oblique grooves (12) extends axially outwardly beyond the side edge (7Bo) of a narrow width ply (7B) of the breaker (7),
the developed axial distance (L2b) from the bent point (12b) to the side edge (7Bo) of the narrow width ply (7B) is not more than 10 % of the developed tread width (TWe),
the auxiliary oblique groove (13) inclines to the same direction as the main oblique grooves (12),
the auxiliary oblique groove (13) has an axially inner end (13i) positioned axially outside the axially inner end (12i) of the main oblique grooves (12) and axially inside the bent point (12b), and an axially outer end (13o) positioned axially outside the bent point (12b) and axially inside the axially outer end (12o) of the main oblique grooves (12).

2. The motorcycle tire according to claim 1, wherein
the angle (α2s) between the axially inner oblique segment (12A) and the axially outer oblique segment (12B) is 160 to 175 degrees.

3. The motorcycle tire according to claim 1 or 2, wherein
the width of the axially inner oblique segment (12A) is gradually increased from the axially inner end (12i) towards the bent point (12b).

4. The motorcycle tire according to claim 1, wherein
the developed axial distance (L3b) from the axially outer end (13o) of the auxiliary oblique groove (13) to the bent point (12b) of the main oblique groove (12) is 5 to 10 % of the developed tread width (TWe).

5. The motorcycle tire according to any one of claims 1-4, wherein the developed axial distance (L2i) from the axially inner end (12i) of the main oblique grooves (12i) to the tire equator (C) is 7.5 to 15 % of the developed tread width (TWe), and
the developed axial distance (L2o) from the axially outer end (12o) of the main oblique grooves (12) to the tread edge (2t) is 5 to 10% of the developed tread width (TWe).

## Patentansprüche

1. Motorradreifen (1), umfassend
einen Laufflächenabschnitt (2),
ein Paar Seitenwandabschnitte (3),
ein Paar Wulstabschnitte (4), jeweils mit einem Wulstkern (5) darin,
eine Karkasse (6), die sich zwischen den Wulstabschnitten (4) durch den Laufflächenabschnitt (2) und Seitenwandabschnitte (3) erstreckt, und
einen Breaker (7), der radial außerhalb der Karkasse (6) in dem Laufflächenabschnitt (2) angeordnet und aus zwei Kreuzlagen (7A, 7B) von Breakerkorden (7c) zusammengesetzt ist,
wobei der Laufflächenabschnitt (2) auf jeder Seite des Reifenäquators (C) mit schrägen Hauptrillen (12) versehen ist, so dass eine jede der schrägen Hauptrillen (12) ein axial inneres Ende (12i) in einem bestimmten axialen Abstand von dem Reifenäquator (C) aufweist und sich axial nach außen erstreckt und innerhalb des Laufflächenabschnitts (2) endet,
eine jede der schrägen Hauptrillen (12) ein axial inneres schräges Segment (12A) umfasst, das sich von dem axial inneren Ende (12i) axial nach außen erstreckt, während es sich in eine Reifenumfangsrichtung unter einem kleinen Winkel (α2i) mit Bezug auf die Reifenumfangsrichtung neigt, und
ein axial äußeres schräges Segment (12B), das sich von dem axial äußeren Ende des axial inneren schrägen Segments (12A) erstreckt, während es sich in die eine Reifenumfangsrichtung unter einem großen Winkel (α2o) mit Bezug auf die Reifenumfangsrichtung neigt, welcher größer ist als der kleine Winkel (α2i) des axial inneren schrägen Segments (12A), um einen Knickpunkt (12b) dazwischen zu bilden, und
der Laufflächenabschnitt (2) ferner mit einer schrägen Zusatzrille (13) versehen ist, die sich mit den schrägen Hauptrillen (12) abwechselt,
**dadurch gekennzeichnet, dass**
die zwei Kreuzlagen (7A, 7B) von Breakerkorden (7c) unterschiedliche axiale Breiten aufweisen,
eine jede der schrägen Hauptrillen (12) sich axial nach außen über die Seitenkante (7Bo) einer Lage (7B) des Breakers (7) mit schmaler Breite hinaus erstreckt,
der abgewickelte axiale Abstand (L2b) von dem Knickpunkt (12b) zu der Seitenkante (7Bo) der Lage (7B) mit schmaler Breite nicht größer als 10 % der abgewickelten Laufflächenbreite (TWe) ist,
die schräge Zusatzrille (13) sich in die gleiche Richtung wie die schrägen Hauptrillen (12) neigt,
die schräge Zusatzrille (13) ein axial inneres Ende (13i) aufweist, das axial außerhalb des axial inneren Endes (12i) der schrägen Hauptrillen und axial innerhalb des Knickpunkts (12b) angeordnet ist, und ein axial äußeres Ende (13o), das axial außerhalb des Knickpunkts (12b) und axial innerhalb des axial äußeren Endes (12o) der schrägen Hauptrillen (12) angeordnet ist.

2. Motorradreifen nach Anspruch 1, wobei der Winkel (α2s) zwischen dem axial inneren schrägen Segment (12A) und dem axial äußeren schrägen Segment (12B) 160 bis 175 Grad beträgt.

3. Motorradreifen nach Anspruch 1 oder 2, wobei die Breite des axial inneren schrägen Segments (12A) von dem axial inneren Ende (12i) in Richtung des Knickpunkts (12b) allmählich zunimmt.

4. Motorradreifen nach Anspruch 1, wobei der abgewickelte axiale Abstand (L3b) von dem axial äußeren Ende (13o) der schrägen Zusatzrille (13) zu dem Knickpunkt (12b) der schrägen Hauptrille (12) 5 bis 10 % der abgewickelten Laufflächenbreite (TWe) beträgt.

5. Motorradreifen nach einem der Ansprüche 1 bis 4, wobei der abgewickelte axiale Abstand (L2i) von dem axial inneren Ende (12i) der schrägen Hauptrillen (12i) zu dem Reifenäquator (C) 7,5 bis 15 % der abgewickelten Laufflächenbreite (TWe) beträgt, und
der abgewickelte axiale Abstand (L2o) von dem axial äußeren Ende (12o) der schrägen Hauptrillen (12) zu der Laufflächenkante (2t) 5 bis 10 % der abgewickelten Laufflächenbreite (TWe) beträgt.

## Revendications

1. Pneumatique pour motocyclette (1) comprenant
une portion formant bande de roulement (2),
une paire de portions de parois latérales (3),
une paire de portions de talons (4) ayant chacune une âme de talon (5) à l'intérieur,
une carcasse (6) s'étendant entre les portions de talons (4) à travers la portion formant bande de roulement (2) et les portions de parois latérales (3), et
une fausse ceinture (7) disposée radialement à l'extérieur de la carcasse (6) dans la portion formant bande de roulement (2) et composée de deux nappes croisées (7A, 7B) de câblés de fausse ceinture (7c),
la portion formant bande de roulement (2) est pourvue, sur chaque côté de l'équateur de pneumatique (C), de rainures principales obliques (12), de sorte que chacune des rainures principales obliques (12) présente une extrémité axialement intérieure (12i) à une certaine distance axiale de l'équateur de pneumatique (C), et s'étend axialement à l'extérieur et se termine à l'intérieur de la portion formant bande de roulement (2),
chacune des rainures principales obliques (12) comprend un segment oblique axialement intérieur (12A) s'étendant axialement vers l'extérieur depuis ladite extrémité axialement intérieure (12i), tout en s'inclinant dans une direction circonférentielle du pneumatique sous un petit angle (α2i) par rapport à la direction circonférentielle du pneumatique, et
un segment oblique axialement extérieur (12B) s'étendant depuis l'extrémité axialement extérieure du segment oblique axialement intérieur (12A), tout en s'inclinant vers ladite première direction circonférentielle du pneumatique sous un grand angle (α2o) par rapport à la direction circonférentielle du pneumatique, qui est plus grand que le petit angle (α2i) du segment oblique axialement intérieur (12A) de manière à former un point d'inflexion (12b) entre ceux-ci, et
la portion formant bande de roulement (2) est en outre pourvue d'une rainure oblique auxiliaire (13) de manière à alterner avec les rainures obliques principales (12),
**caractérisé en ce que**
les deux nappes croisées (7A, 7B) des câblés de fausse ceinture (7c) ont des largeurs axiales différentes,
chacune des rainures obliques principales (12) s'étend axialement vers l'extérieur au-delà de la bordure latérale (7Bo) d'une nappe de largeur étroite (7B) de la fausse ceinture (7),
la distance axiale développée (L2b) depuis le point d'inflexion (12b) jusqu'à la bordure latérale (7Bo) de la nappe de largeur étroite (7B) ne dépasse pas 10 % de la largeur de roulement développée (TWe),
la rainure oblique auxiliaire (13) est inclinée dans la même direction que les rainures obliques principales (12),
la rainure oblique auxiliaire (13) présente une extrémité axialement intérieure (13i) positionnée axialement à l'extérieur de l'extrémité axialement intérieure (12i) des rainures obliques principales (12) et axialement à l'intérieur du point d'inflexion (12b), et une extrémité axialement extérieure (13o) positionnée axialement à l'extérieur du point d'inflexion (12b) et axialement à l'intérieur de l'extrémité axialement extérieure (12o) des rainures obliques principales (12).

2. Pneumatique pour motocyclette selon la revendication 1, dans lequel l'angle (α2s) entre le segment oblique axialement intérieur (12A) et le segment oblique axialement extérieur (12B) et de 160 à 175°.

3. Pneumatique pour motocyclette selon la revendication 1 ou 2, dans lequel
la largeur du segment oblique axialement intérieur (12A) augmente progressivement depuis l'extrémité axialement intérieure (12i) vers le point d'inflexion (12b).

4. Pneumatique pour motocyclette selon la revendication 1, dans lequel la distance axiale développée (L3b) depuis l'extrémité axialement extérieure (13o) de la rainure oblique auxiliaire (13) jusqu'au point d'inflexion (12b) de la rainure oblique principale (12) est de 5 à 10 % de la largeur de roulement développée (TWe).

5. Pneumatique pour motocyclette selon l'une quelconque des revendications 1 à 4, dans lequel la distance axiale développée (L2i) depuis l'extrémité axialement intérieure (12i) des rainures principales obliques (12i) jusqu'à l'équateur de pneumatique (C) est de 7,5 à 15 % de la largeur de roulement développée (TWe), et
la distance axiale développée (L2o) depuis l'extrémité axialement extérieure (12o) des rainures principales obliques (12) jusqu'à la bordure de roulement (2t) est de 5 à 10 % de la largeur de roulement développée (TWe).
